# EUROPEAN PATENT APPLICATION

(11) **EP 1 441 574 A1**
(43) Date of publication of application: **28.07.2004**
(21) Application number: 02775415.9
(22) Date of filing: 30.10.2002
(51) Int. Cl.: H05B 41/24

(54) **DISCHARGING LAMP APPARATUS**

(30) Priority: 01.11.2001 JP 2001336434; 16.11.2001 JP 2001351886
(71) Applicant: Harison Toshiba Lighting Corporation, Imabari-shi, Ehime 794-0042 (JP)
(72) Inventor: ABE, Eiji, Imabari-shi, Ehime 794-0054 (JP); SIBA, Toshiaki, Saijo-shi, Ehime 793-0010 (JP)
(74) Representative: Kramer - Barske - Schmidtchen
(86) International application number: PCT/JP2002/011260
(87) International publication number: WO 2003/039207

(57) **Abstract**

The discharge lamp device according to the present invention has a drive signal circuit 10 connected with a DC power supply, a first and a second switching elements S1 and S2 which are controlled by turning ON and OFF by turns by a pair of drive signals 11a and 11b supplied from the drive signal circuit 10 and connected in series between the terminals of the DC power supply, an induction element L9 (L3) connected in series with at least one of these switching elements S1 and S2, a pulse transformer 12 having a primary coil L1 and a secondary coil L2 and the primary coil L1 is connected with the DC power supply and the direction of the current is switched by turns by the switching elements S1 and S2, a discharge lamp 13 arranged by connecting between the secondary terminals L2 of the pulse transformer 12, and a Zener diode element D1 connected with the second switching element S2 in parallel, having a feature of eliminating the generation of a surge pulse of high voltage when lighting, and having an excellent safety and stability.

## Description

### FIELD OF INVENTION

The present invention relates to a discharge lamp device suited for back light sources for liquid crystal display units, and especially to a power supply source for driving discharge lamps.

### BACKGROUND TECHNOLOGY

Conventional liquid crystal display units are widely used for electronic devices such as personal computers, car navigation systems. In such liquid display devices, cold cathode fluorescent lamps with less heat generation are used as back light sources.

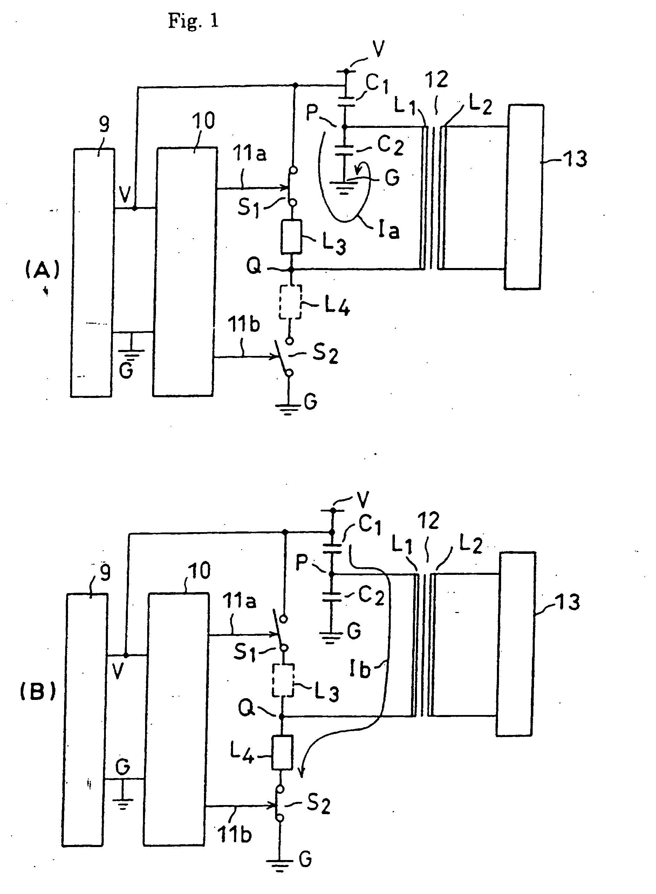

Conventionally, a lighting and driving circuit shown in Fig.1 is known as a circuit for driving cold cathode fluorescent lamps. That is, as shown in the Fig. 1(A), a drive signal circuit 10 connected to a DC power supply 9 outputs a pair of square wave drive signals 11a and 11b in the circuit. These square wave drive signals 11a and 11b turn first and second semiconductor switching elements S1 and S2, which constitute an inverter, ON and OFF alternately. These switching elements S1 and S2 of each other are connected between the positive terminal V and the ground G of the DC power supply 9 in series. Each of the first and the second semiconductor switching element is connected with induction elements L3 and L4 in series respectively for shaping waveforms. A capacitor C1 and a capacitor C2 are connected between the positive terminal V of the DC power supply 9 and the ground G in series. Input terminals of the primary coil L1 of the pulse transformer 12 are connected with a connecting point P of a capacitor C1 and a capacitor C2 and with an end Q of a series connected circuit constituting the first switching element S1 and an induction element L3. An external electrode fluorescent lamp 13 is connected between the output terminals of the secondary coil L2 of the pulse transformer 12.

Then, operation of the lighting and driving circuit is explained. Under the control of the square wave drive signals 11a and 11b supplied from the drive signal circuit 10, a current Ia flows in the circuit of the positive terminal V of the DC power supply 9- the switching element S1 -the induction element L3 - the primary coil L1 of the pulse transformer 12 - the capacitor C2 - the ground G, when the switching element S1 is ON and the switching element S2 is OFF, as shown in Fig. 1 (A). Under the control of square wave drive signal 11a and 11b, a current Ib flows in the circuit of the positive terminal V of the DC power supply 9 - the capacitor C1 - the primary coil L1 of the pulse transformer 12 - the induction element L4 - the switching element S2 - the ground G, when the switching element S1 is OFF and the switching element S2 is ON, as shown in Fig. 1 (B). Since such operation is repeated under the control of the square wave drive signals 11a and 11b supplied from the drive signal circuit 10, and current Ia and Ib flow by turns in the primary coil L1 of the pulse transformer 12 , square wave voltage occurs continuously between the output terminals of the secondary coil L2 of the pulse transformer 12. This output voltage is applied to the external electrode fluorescent lamp 13 to light and drive it.

However, in the lighting and driving device of the discharge lamps mentioned above, there is a problem that a steep and high voltage surge pulse is generated, at the time of ON OFF of the switching elements S1 and S2, by the action of the induction elements L3 and L4 having a resistance component. That is, oscillating current is generated at the time of ON and OFF of the switching elements S1 and S2, due to the so-called ringing phenomenon in a LC resonance circuit, which contains capacitor C1, the capacitor C2, the primary coil L1 of the pulse transformer 12, induction elements L3 and L4, etc., and thus the high voltage surge voltage is generated at both ends of the induction elements L3 and L4. For this reason, there is a possibility of destroying the switching elements S1 and S2 which constitute the inverter circuit on the primary side of the pulse transformer 12.

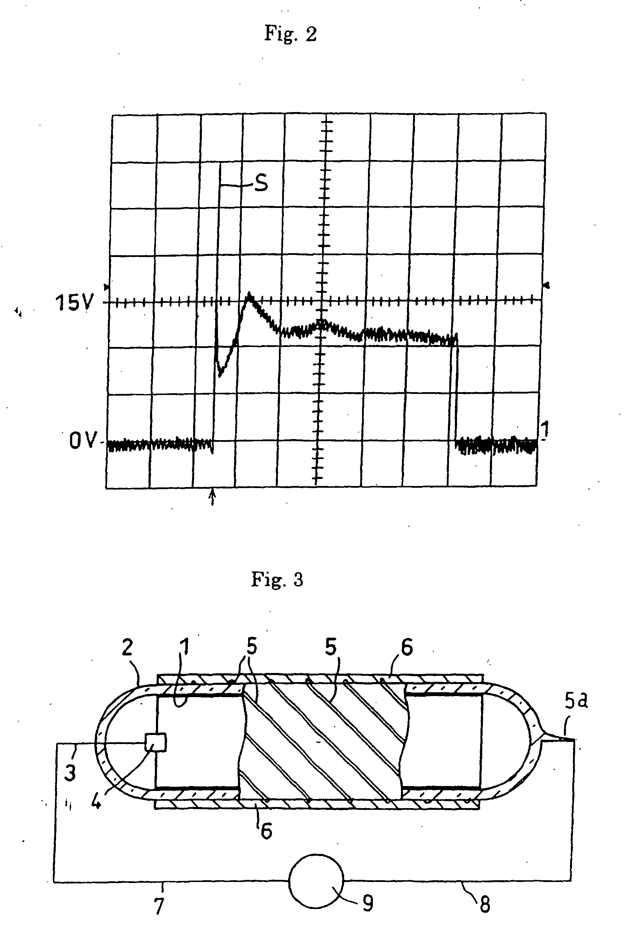

On the other hand, a voltage having a waveform containing a high surge pulse S as shown in Fig. 2 is generated between the output terminals of the secondary side winding L2 of the pulse transformer 12, and it is also supplied to the electric discharge lamp 13. Here, the abscissa of Fig. 2 indicates time with 5 µs/div, and the ordinate indicates voltage with 5.0V/div. The generation of such steep and high voltage surge pulse voltage may damage safety, reliability or life of the discharge lamp device of this type.

There is measure against such high voltage surge pulse to substitute the semiconductor switching elements S1 and S2 with those having a withstand voltage exceeding the above-mentioned surge voltage. However, the semiconductor switching element having the withstand voltage exceeding surge voltage becomes large-sized by itself, which does not meet the need of miniaturization desired as a back light of a liquid crystal display.

The present invention was made in view of the above-mentioned situation and has an object to provide a discharge lamp device, in which controls or reduces generation of the high voltage surge pulse at the time of lighting, and which is excellent in safety and stability.

### DISCLOSURE OF THE INVENTION

The discharge lamp device according to one aspect of the present invention has a drive signal circuit connected with a DC power supply, first and second switching elements which are turned ON and OFF alternately under the control of a pair of drive signals supplied from the drive signal circuit and are connected in series between the terminals of the DC power supply, an inductance element connected in series with each of the switching elements in series, a pulse transformer having a primary coil and a secondary coil, in which the primary coil is connected to the DC power supply and a direction of current is changed alternately by the switching elements, a discharge lamp which is connected between terminals of the secondary coil of the pulse transformer, and a Zener diode element which is connected in parallel with the second switching element.

The discharge lamp device according to another aspect of the present invention has a drive signal circuit which is connected with a DC power supply, first and second switching elements which are turned ON and OFF alternately under the control of a pair of drive signals supplied from the drive signal circuit and are connected in series between the terminals of the DC power supply, first and second inductance elements connected with each of the switching elements in series respectively, a pulse transformer having a primary coil and a secondary coil, in which the primary coil is connected to the DC power supply and a direction of current is changed alternately by the switching elements, a discharge lamp which is connected between terminals of the secondary coil of the pulse transformer, a first uni-directional current element, which is connected in series with the second switching element, and a second uni-directional current element, which is connected in parallel with the first uni-directional element and the second induction element.

The discharge lamp device according to yet other aspect of the present invention has a drive signal circuit which is connected with a DC power supply, first and second switching elements which are turned ON and OFF alternately under the control of a pair of drive signals supplied from the drive signal circuit and are connected in series between the terminals of the DC power supply, first and second inductance elements connected with each of the switching elements in series respectively, a pulse transformer having a primary coil and a secondary coil, in which the primary coil is connected to the DC power supply and a direction of current is changed alternately by the switching elements, a discharge lamp which is connected between terminals of the secondary coil of the pulse transformer, a first uni-directional current element, which is connected in series with the second switching element, and a second uni-directional current element, which is connected in parallel with the first uni-directional element.

Further, in the discharge lamp device according to yet other aspect of the present invention, the above-mentioned uni-directional current element is one selected from the group consisting of a diode element, a transistor element, an MOSFET element, and a photo-coupler.

Further, in the discharge lamp device according to yet other aspect of the present invention, the pair of drive signals supplied from the drive signal circuit is PWM modulated by a light control signal.

Thus, in the discharge lamp device according to one aspect of the present invention stated above, the current flowing in an opposite direction is cut or suppressed by providing a uni-directional current element in the current circuit, in which the current flows in the predetermined direction (as shown by arrows Ia and Ib) at the time of ON and OFF of the switching elements. Thus, the ringing phenomenon in the circuit on the side of the primary winding of a pulse transformer can be prevented. Moreover, these uni-directional current elements make the surge voltage generated due to the ringing phenomenon bypass the switching element, thereby preventing destruction of a semiconductor switching elements.

### BRIEF DESCRIPTION OF THE DRAWINGS

Fig. 1 (A) and (B) are the block diagrams for explaining constitution and operation of the conventional discharge lamp device.
Fig. 2 is a diagram showing a voltage waveform generated by the discharge lamp device shown in Fig. 1.
Fig. 3 is a longitudinal section showing an example of the external electrode fluorescent lamp used for the discharge lamp device of the present invention.
Fig. 4 is a circuit diagram of the discharge lamp device showing a first embodiment of the present invention.
Fig. 5 is a voltage waveform which appears in the secondary coil L2 of the pulse transformer 12 in the discharge lamp device mentioned above.
Fig. 6 is a circuit diagram of the discharge lamp device showing a second embodiment of the present invention.
Fig. 7 is a diagram showing a voltage waveform generated on the secondary side of the pulse transformer 12 in the above discharge lamp device.
Fig. 8 (A) and (B) are the circuit diagrams for explaining the constitution and drive operation of a discharge lamp according to a third embodiment of the present invention.
Fig. 9 is a diagram showing a voltage waveform A and a current waveform B, which are generated in the secondary coil L2 of the pulse transformer 12 in the third embodiment.
Fig. 10 is a graph comparatively showing the relation between lamp input electric power and relative light flux of the discharge lamp device of the embodiment and the conventional discharge lamp device.
Fig. 11 is a diagram showing a relation between a pulse waveform output from the drive signal generating circuit 11 and a light control ratio.

### DETAILED DESCRIPTION OF THE INVENTION

The embodiments of the present invention will be explained below referring to the figures.

Fig.3 is a cross section showing an example of an external electrode fluorescent lamp used in the present invention. This external electrode fluorescent lamp includes a glass tube 2, on an inner wall of which a phosphor film 1 is formed and in which a rare gas (discharge medium) composed mainly of xenon is enclosed airtight therein, an inner electrode 4, which is arranged on one end of inside the glass tube 2, a lead terminal 3, which is lead out of the glass tube 2, and an external electrode 5, which is spirally wound around the outer surface of the glass tube 2 along almost entire length of the tube axis at a prescribed pitch.

Here, the glass tube 2 has an outer diameter of about 1.2 to 10.0 mm and a length of about 50 to 750 mm, in which a rare gas composed mainly of xenon gas is enclosed as an electric discharge medium. In the figure, 5a is a lead terminal of an external electrode 5, and 6 is a translucent heat shrinkage tube for coating the surface of the external electrode 5 for preventing the displacement of the external electrode 5 and for electric insulation.

When the square wave voltage of 1-3kV is impressed between the internal electrode 4 and the external electrode 5 through the voltage supply lines 7 and 8 from the power supply 9 in the external electrode fluorescent lamp, electric discharge will begin between the electrodes 4 and 5, and an ultraviolet ray will be emitted within the glass tube 2. The emitted ultraviolet ray is converted into a visible light by the phosphor film 1 on the inner surface of the glass tube 2.

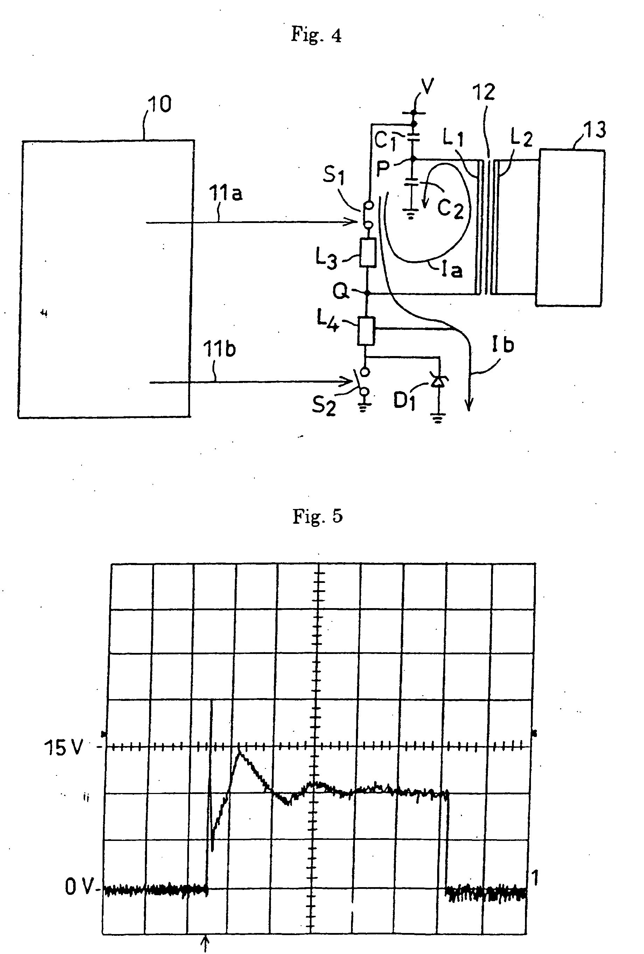

Fig. 4 is a circuit diagram showing the first embodiment of the discharge lamp device according to the present invention. In the figure, 10 is a drive signal circuit connected to a DC power supply (not illustrated), which outputs the square wave drive signal. S1 and S2 are the semiconductor switching elements, which constitute an inverter circuit, and are control to be alternately turned ON and OFF by the square wave drive signals 11a and 11b supplied from the drive signal circuit 10. That is, square wave drive signals 11a and 11b have the same repetition frequency and phases, which are different from each other by 180 degrees. Thus, one is in a low level when the other is in a high level (H). Further, 12 is the pulse transformer having a primary coil L1 and a secondary coil L2, and 13 is an external electrode fluorescent lamp, which is arranged by connecting between the terminals of the secondary coil L2 of the pulse transformer 12.

The switching elements S1 and S2 are connected between the positive terminal V of the DC power supply and the ground G in series. Inductance elements L3 and L4 are connected to each of the first and the second semiconductor switching elements in series. A capacitor C1 and a capacitor C2 are connected between the terminal V of the DC power supply and the ground G in series. Input terminals of the primary coil L1 of the pulse transformer 12 are connected with a connecting point P of a capacitor C1 and a capacitor C2 and with an end Q of a series connected circuit constituting the first switching element S1 and an induction element L3. A circuit containing a Zener diode element D1 having a forward voltage Vf, which is below a withstanding voltage of the switching element S2, is connected in parallel with the semiconductor switching element S2, being one end of the circuit grounded.

In the next, the operation of the discharge lamp device is explained. When the switching element S1 is ON, and the switching element S2 is OFF under the control of the square wave drive signals 11a and 11b supplied from the drive signal circuit 10, current Ia flows in the circuit of DC power supply terminal V - the switching element S1 - inductance element L3 - primary coil L1 of the pulse transformer 12 - capacitor C2 - ground G. When the switching element S1 is OFF, and the switching element S2 is ON under the control of the square wave drive signals 11a and 11b supplied from the drive signal circuit 10, current Ib flows in the circuit of the DC power supply terminal V - the capacitor C1 - the primary coil L1 of the pulse transformer 12 - the inductance element L4 - the switching element S2 - ground G.

Such operation is repeated under the control of the square wave drive signals 11a and 11b supplied from the drive signal circuit 10, and current Ia and Ib flows alternately to the primary coil L1 of the pulse transformer 12. Thus, square wave voltage is generated continuously between the output terminals of the secondary coil L2 of the pulse transformer 12. This output voltage is applied to the external electrode fluorescent lamp 13, to light and drive it.

Here, current Ia and Ib flows alternately in the primary coil L1 of the pulse transformer 12 by ON and OFF operation of the switching elements S1 and S2, as mentioned above, which arises ringing by action of the inductance elements L3 and L4 inserted in the current passage, resulting in the generation of a big surge voltage. As mentioned above, Vf of the Zener diode element D1, which is connected in parallel with the switching element S2 and one end of which is grounded, is set as higher than the voltage value that does not contain the surge component, which is induced regularly in the primary terminal L1 of the pulse transformer 12 during usual lighting operation, and is set below the withstand voltage of the semiconductor switching element S2 (or semiconductor switching element S1). When the steep surge pulse is generated by the alternate switching drive of the semiconductor switching elements S1 and S2 while the necessary drive signals are supplied into the pulse transformer 12, the pulse current based on the surge voltage is superimposed on the current Ib and flows to the switching element S2. However, the current bypasses the switching element S2 through the Zener diode element D1 to the grounding circuit, since the Zener diode element D1 is turned ON. Therefore, even if the big surge pulse, which exceeds withstand voltage of the semiconductor switching element S2 is generated, the semiconductor switching element S2 is not damaged. In addition, when the surge pulse is superimposed on the current Ia, which flows when the semiconductor switching element S1 is ON and the semiconductor switching element S2 is OFF, the semiconductor switching element S1 is not destroyed since the current Ia flows to the ground through a capacitor C2.

Fig. 5 is a voltage waveform of the above-mentioned discharge lamp device, which appears in the secondary coil L2 of the pulse transformer 12. As compared with the voltage waveform in the conventional discharge lamp device shown in Fig. 2, the surge pulse has been decreased sharply. That is, since the steep high voltage surge pulse generated at the time of ON and OFF of the semiconductor switching elements S1 and S2, is released to the ground easily and certainly, the damage of the semiconductor switching elements S1 and S2 by the above-mentioned high voltage surge pulse are avoided, and stable lighting operation is maintained.

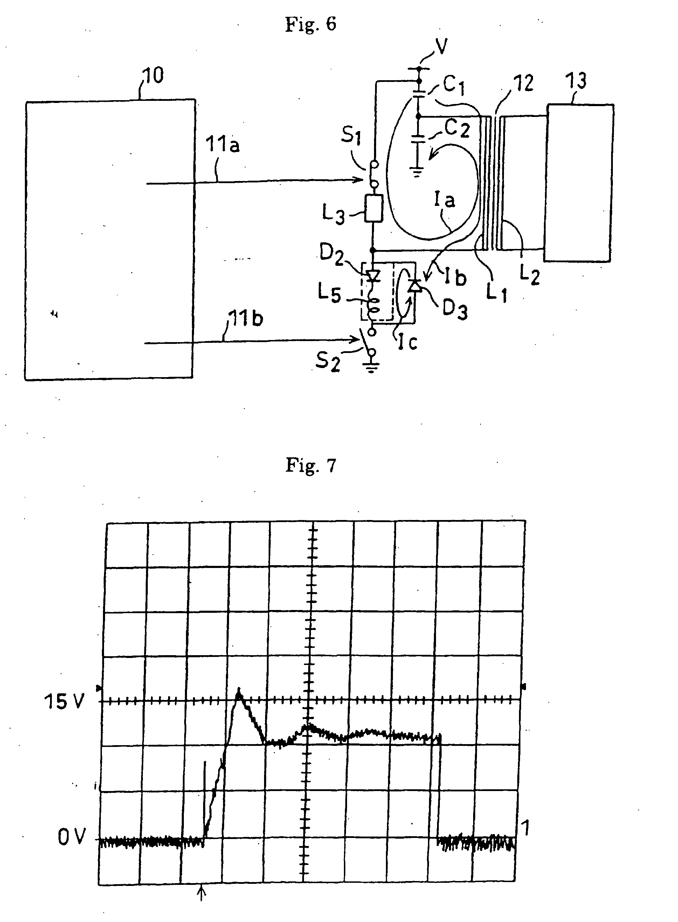

Fig. 6 is a circuit diagram showing the general concept of the discharge lamp device according to the second embodiment of the present invention. In the figure, the same symbol is are assigned to the same portions of the discharge lamp device shown in Fig. 4, with detailed explanation being omitted, and different portions are explained below.

The drive signal circuit (inverter drive signal unit) 10, which outputs square wave signals is connected to the primary coil L1 of the pulse transformer 12 through the semiconductor switching elements S1 and S2. The inductor element L3 is connected to the semiconductor switching element S1 in series. A first uni-directional current element D2 and an induction element L5 are connected in series to the semiconductor switching element S2. Further, a second uni-directional current element D3 is connected in parallel with the series connected circuit of the uni-directionalcurrentelementD2andtheinductorelement L5. Here, the second uni-directional current element D3 is connected to the first uni-directional current element D2 with a polarity being opposite to each other. In addition, the uni-directional current elements D2 and D3 are diode elements and the induction element L5 isa coil, for example.

Basic operation of such discharge lamp device is the same as that of the first embodiment. Namely, when the switching element S1 is ON, and the switching element S2 is OFF under the control of the square wave drive signals 11a and 11b supplied from the drive signal circuit 10, current Ia flows in the circuit of DC power supply terminal V - the switching element S1 - inductance element L3-primary coil L1 of the pulse transformer 12 - capacitor C2 - ground G. When the switching element S1 is OFF, and the switching element S2 is ON under the control of the square wave drive signals 11a and 11b supplied from the drive signal circuit 10, current Ib flows in the circuit of the DC power supply terminal V - the capacitor C1-the primary coil L1 of the pulse transformer 12 - the inductance element L4 - the switching element S2 - ground G.

Here, when the steep surge pulse is generated in the primary coil L1 of the pulse transformer 12 by the alternate switching drive of the semiconductor switching elements S1 and S2, a current Ib superimposed by the pulse due to the surge pulse flows into the semiconductor switching element S2 through the first uni-directional current element D2 and induction element L5. However, a current Ic flows in the second uni-directional current element D3 by induced voltage of the opposite direction generated between the both ends of the induction element L5. A part of current Ib superimposed by the surge pulse is consumed in its energy in the parallel circuit, which consists of the uni-directional current element D2, the induction element L5, and the second uni-directional current element D3, so that no damage is caused to the semiconductor switching element S2.

Moreover, with the first uni-directional current element D2, which is connected in series to the semiconductor switching element S2, the current flow in the opposite direction is prevented, thereby preventing the ringing.

Fig. 7 is a diagram showing a voltage waveform generated on the secondary side of the pulse transformer 12 in the above-mentioned discharge lamp device. The diagram shows that the surge voltage S in an output voltage waveform curve of the discharge lamp device is drastically suppressed compared with that in the conventional equipment shown in Fig. 2. Moreover, it is clear that the size of surge voltage S is lower than that in the embodiment shown in Fig. 5.

Here, although the second uni-directional current element D3 was connected in parallel with the in-series connection circuit of the uni-directional current element D2 and the induction element L5 in the case of the embodiment of Fig. 6, the same effect is obtained even if it is connected in parallel between the terminals of induction element L5 itself.

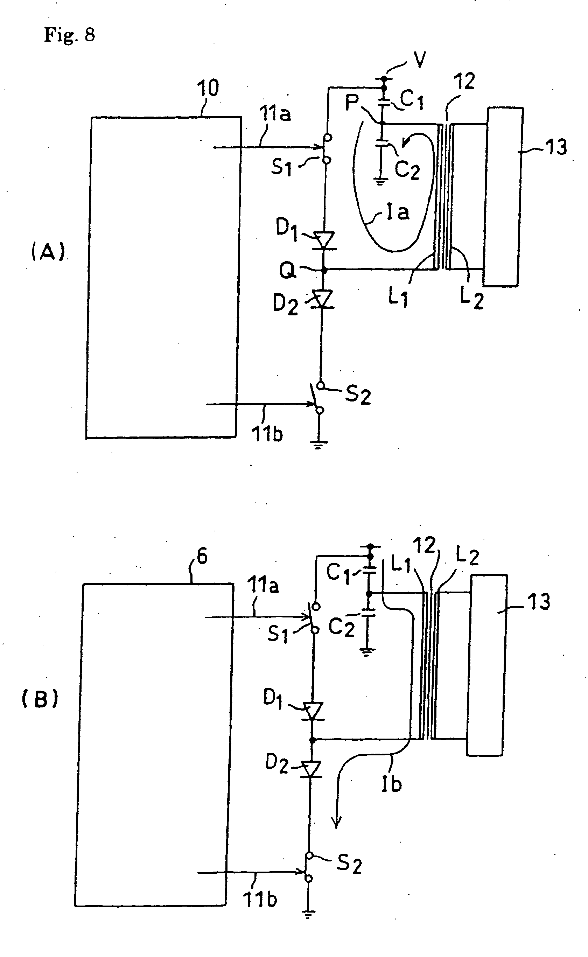

Fig. 8 (A) and (B) are the circuit diagrams for explaining a general concept and drive operation of the discharge lamp drive equipment according the third embodiment of the invention. The same symbols are assigned to the same portions as those in the embodiment shown in Fig. 4 or Fig. 6, omitting detailed explanation and the explanation will be focused on the portions which differ from those below.

The drive signal circuit (inverter drive signal unit) 10 supplies the square wave signals 7a and 7b having different phases with each other to a pair of switching elements S1 and S2, which are controlled by being turned ON and OFF alternately. A pair of switching elements S1 and S2, being connected in series between DC power supply V and the grounding G, alternately change the direction of current which flows to the primary coil L1 of the pulse transformer 12 from DC power supply V. First and second capacitors C1 and C2 are connected in series between the ground G and DC power supply V. One of the terminals of primary coil L1 of the pulse transformer 12 is connected to a connecting point P of the first and second capacitors C1 and C2. Between the switching elements S1 and S2, first and second uni-directional current elements D1 and D2 are connected in series with the same polarity. The other terminal of the primary coil L1 of the pulse transformer 12 is connected to a connecting point Q of the uni-directional current elements D1 and D2.

The basic operation of the discharge lamp device described is the same as that of the first or second embodiment. Namely, when the switching element S1 is ON and the switching element S2 is OFF, a current Ia flows in the circuit of DC power supply terminal V - switching element S1 - first uni-directional current element D1-primary coil L1 of pulse transformer 12 - capacitor C2 - grounding G, under the control of the square wave drive signals 11a and 11b supplied from the drive signal circuit 10. When the switching element S1 is OFF and the switching element S2 is ON, a current Ib flows in the circuit - DC power supply terminal V - capacitor C1 - primary winding L1 of pulse transformer 12 - second uni-directional current element D2 - switching element S2 - grounding G, under the control of the square wave drive signals 11a and 11b supplied from the drive signal circuit 10.

Since the uni-directional current elements D1 and D2, such as diode elements for example, are inserted in series into the circuit, where the currents Ia and Ib flow, any current flowing in the opposite direction to those of the currents Ia and Ib is cut. That is, the ringing phenomenon is completely oppressed, with which oscillating currents flow in the opposite directions accompanying with the currents Ia and Ib, due to the resonance phenomenon of the circuit.

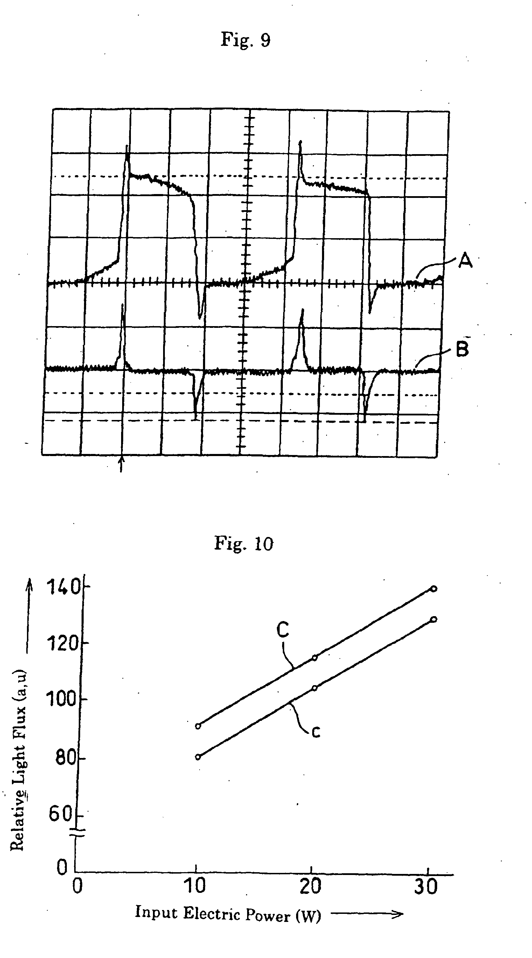

Fig. 9 is a diagram showing a voltage waveform A and a current waveform B which are generated in the secondary coil L2 of the pulse transformer 12 in the third embodiment mentioned above. The abscissa of the diagram indicate time, with a scale of 5 µ sec/div, and ordinates indicate voltage V and current A, with scales of 500V/div and 10mA/div, respectively.

In the discharge lamp device according to the embodiment, not only the ringing is prevented to generate but also the peak value of the lamp current supplied to the discharge lamp becomes high compared with that in the conventional equipment. Moreover, it is confirmed that the luminescence efficiency of the discharge lamp increases. Fig. 10 is a graph which compares the relation between lamp input power and relative light flux in the discharge lamp device according to the embodiment and the conventional discharge lamp device respectively. In the figure, curvilinear C shows the relative light flux of the embodiment, and curvilinear c shows that of the conventional device, respectively.

Furthermore, according to the discharge lamp device of the embodiment described, stable light control can be realized at the time adjusting light control ratio of a discharge lamp, since it enables to prevent generating of the ringing and to supply a stable drive voltage to discharge lamp. The light control is one of the performances required for this kind of discharge lamp. Here, a light control means the luminosity adjustment of a discharge lamp, and a ratio of an arbitrary luminosity to the maximum luminosity is called light control ratio. For example, in the case of the discharge lamp for automobiles, it is required that the light is operated stable until the light control ratio reaches to 2%.

Such adjustment of the light control ratio is made by changing the number of output pulse per unit time of the drive signal generating circuit 10 in the discharge lamp device described.

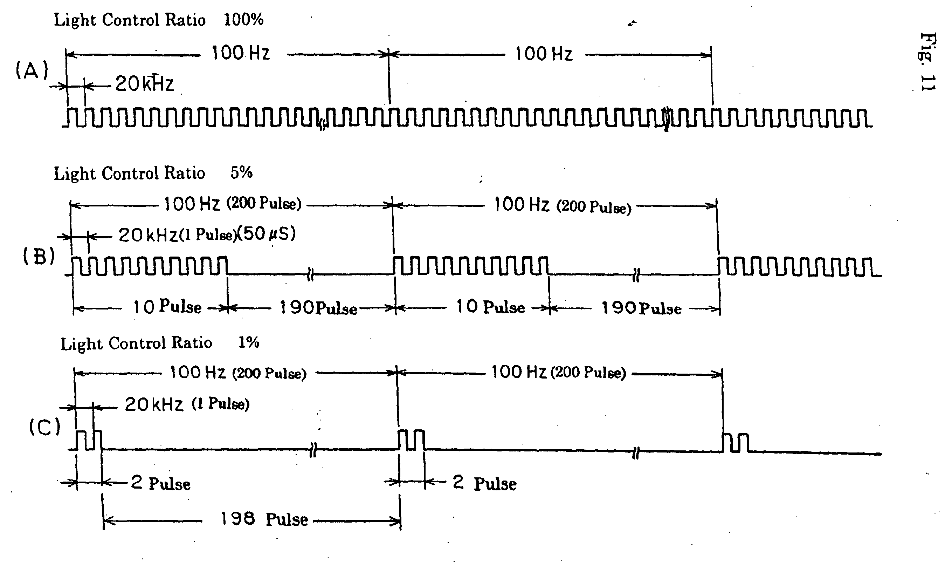

Fig. 11 shows a pulse waveform for explaining the relation between the output pulse of the drive signal generating circuit 11 and the light control ratio. Fig. 11 (A) is a waveform of the drive signal 11a (or 11b) when the light control ratio is 100%. When repetition frequency of the drive signal 11a is selected as 20kHz, for example, the repetition period is 50 µs. Now, let a unit time to be 0.01s (equal to a repetition frequency of 100Hz) for the drive signal 11a, the number of pulse per unit time of the drive signal generating circuit 11 will become 200. Namely, when the light control ratio is 100%, drive signal 11a has 200 pulses per unit time, and is repeated at the frequency of 100Hz.

Fig. 11 (B) is a waveform of drive signal 11a (or 11b) when the light control ratio is 5%. The number of the output pulses of the drive signal generating circuit 11 is 10 per unit time in this case.

Fig. 11 (C) is a waveform of the drive signal 11a (or 11b) when the light control ratio is 1%. The number of the output pulses of the drive signal generating circuit 11 is one per unit time in this case.

As it is clear from the waveforms of Fig. 11 (B) and (C), the number of pulses per unit time is fewer than that shown in Fig. 11(A), where the light control ratio is 100%. However, when the light control ratio is equal, the number of pulses per unit time and their timings are always constant, and are repeated at every unit time. Here, a flicker will be caused if the number or timing of pulse per unit time changes at every unit time.

Although the drive signal generating circuit 10 is not illustrated, the number of the drive signals 11a and 11b per unit time of the output signal of the circuit 10 is controlled to correspond to desired light control ratio by the built in microcomputer, for example.

In the embodiment described, the pair of drive signals supplied from the drive signal circuit are so called PWM modulated by a light control signal.

As mentioned above, the square wave AC voltage wave is supplied to the secondary coil L2 of the pulse transformer 12, where the number of pulses per unit time of which is so controlled and modulated by the light control signal as to respond to desired light control ratio. This is carried out by controlling the semiconductor switching elements S1 and S2 with the output drive signals 11a and 11b of the drive signal circuit 10 by which the number of pulses per unit time was controlled.

When the above light control was applied to the conventional device shown in Fig. 1, the flickering was observed near the inner electrode while the light control ratio was small. However, in the embodiments described, stable lighting operation was confirmed even though the light control ratio was small.

The present invention is not limited to the above-mentioned embodiments, but is possible to make various modifications in the range which does not deviate from the purpose of the invention. For example, although the external electrode fluorescent lamp was used, in which one electric discharge electrode was sealed in the luminescence tube, and the electric discharge electrode of another side has been arranged on the outer surface of the luminescence tube, other type of the lamp may be also used, in which both of the discharge electrodes are arranged on the outer surface of the luminescence tube at opposite portions.

Further, in the each embodiment described, one pulse transformer 12 was driven by one drive signal circuit 10. However, two or more pulse transformers may be driven simultaneously by one drive signal circuit 10, where electric discharge lamp may be connected to each pulse transformer.

Furter, a diode element, a transistor element, an MOSFET element, a photo-coupler and the like can be used as a uni-directional current element which passes current only in one direction.

## Claims

1. A discharge lamp device comprising:
a drive signal circuit connected with a DC power supply,
first and second switching elements which are turned ON and OFF alternately under the control of a pair of drive signals supplied from the drive signal circuit and are connected in series between the terminals of the DC power supply,
an inductance element connected in series with each of the switching elements in series,
a pulse transformer having a primary coil and a secondary coil, in which the primary coil is connected to the DC power supply and a direction of current is changed alternately by the switching elements,
a discharge lamp which is connected between terminals of the secondary coil of the pulse transformer, and
a Zener diode element which is connected in parallel with the second switching element.

2. A discharge lamp device according to claim 1, wherein one end of the primary coil of the pulse transformer is connected with the DC power supply through a first capacitor, and the other end of the primary coil is connected with a connecting point of the first and the second switching elements.

3. A discharge lamp device according to claim 2, wherein the one end of the primary coil of the pulse transformer is connected to a ground through a second capacitor.

4. A discharge lamp device according to claim 3, wherein the first and the second switching elements are semiconductor switching elements.

5. A discharge lamp device according to claim 4, wherein the couple of drive signals supplied from the drive signal circuit are square waves having the same repetition frequency and phases different from each other by 180°.

6. A discharge lamp device according to claim 5, wherein the Zener diode element connected in parallel with the second switching element is connected in a backward direction for the DC power supply, and having a backward voltage lower than the withstand voltage of the second switching element.

7. A discharge lamp device comprising:
a drive signal circuit which is connected with a DC power supply,
first and second switching elements which are turned ON and OFF alternately under the control of a pair of drive signals supplied from the drive signal circuit and are connected in series between the terminals of the DC power supply,
first and second inductance elements connected with each of the switching elements in series respectively,
a pulse transformer having a primary coil and a secondary coil, in which the primary coil is connected to the DC power supply and a direction of current is changed alternately by the switching elements,
a discharge lamp which is connected between terminals of the secondary coil of the pulse transformer,
a first uni-directional current element, which is connected in series with the second switching element, and
a second uni-directional current element, which is connected in parallel with the first uni-directional element and the second induction element.

8. A discharge lamp device according to claim 7, wherein the one end of the primary coil of the pulse transformer is connected with the DC power supply through a first capacitor, and the other end of the primary coil is connected with a connecting point of the first and second switching elements.

9. A discharge lamp device according to claim 8, wherein the one end of the primary coil of the pulse transformer is grounded through a second capacitor.

10. A discharge lamp device according to claim 9, wherein the first and the second switching elements are semiconductor switching elements.

11. A discharge lamp device according to claim 10, wherein the couple of drive signals supplied from the drive signal circuit are square waves having the same repetition frequency and phases different from each other by 180°.

12. A discharge lamp device according to claim 11, wherein the first uni-directional current element connected in series with the second switching element is connected in the forward direction for the DC power supply, and the second uni-directional current element is connected in the backward direction for the DC power supply.

13. A discharge lamp device according to claim 12, wherein the uni-directional current element is at least one selected from the group consisting of a diode element, a transistor element, an MOSFET element, and a photo-coupler.

14. A discharge lamp device according to claim 13, wherein the pair of drive signals supplied from the drive signal circuit are modulated by a light control signal.

15. A discharge lamp device comprising:
a drive signal circuit which is connected with a DC power supply, first and second switching elements which are turned ON and OFF alternately under the control of a pair of drive signals supplied from the drive signal circuit and are connected in series between the terminals of the DC power supply,
first and second inductance elements connected with each of the switching elements in series respectively,
a pulse transformer having a primary coil and a secondary coil, in which the primary coil is connected to the DC power supply and a direction of current is changed alternately by the switching elements,
a discharge lamp which is connected between terminals of the secondary coil of the pulse transformer,
a first uni-directional current element, which is connected in series with the second switching element, and
a second uni-directional current element, which is connected in parallel with the first uni-directional element.

16. A discharge lamp device according to claim 15, wherein the one end of the primary coil of the pulse transformer is connected with the DC power supply through a first capacitor, and the other end of the primary coil is connected with the connecting point of the first and second switching elements.

17. A discharge lamp device according to claim 16, wherein the one end of the primary coil of the pulse transformer is grounded through a second capacitor.

18. A discharge lamp device according to claim 17, wherein the first and the second switching elements are semiconductor switching elements.

19. A discharge lamp device according to claim 18, wherein the couple of drive signals supplied from the drive signal circuit are square waves having the same repetition frequency and phases different from each other by 180°.

20. A discharge lamp device according to claim 19, wherein the first uni-directional current element connected in series with the second switching element is connected in the forward direction for the DC power supply, and the second uni-directional current element is connected in the backward direction for the DC power supply.

21. A discharge lamp device according to claim 20, wherein the uni-directional current element is at least one selected from the group consisting of a diode element, a transistor element, an MOSFET element, and a photo-coupler.

22. A discharge lamp device according to claim 21, wherein the pair of drive signals supplied from the drive signal circuit are modulated by a light control signal.
